# EUROPEAN PATENT APPLICATION

(11) **EP 4 773 423 A1**
(43) Date of publication of application: **08.07.2026**
(21) Application number: 25225257.2
(22) Date of filing: 18.12.2025
(51) Int. Cl.: H01M 50/566, H01M 50/552, H01M 50/553, H01M 50/536

(54) **SECONDARY BATTERY**

(30) Priority: 03.01.2025 KR 20250000901; 28.04.2025 KR 20250055082
(71) Applicant: SK On Co., Ltd., Seoul 03161 (KR)
(72) Inventor: LEE, Ki Dong, 34124 Daejeon (KR); YOU, Hyeon Jeong, 34124 Daejeon (KR); LEE, Yoong Hee, 34124 Daejeon (KR); JU, Seung Hoon, 34124 Daejeon (KR)
(74) Representative: Prüfer & Partner mbB Patentanwälte · Rechtsanwälte

(57) **Abstract**

A secondary battery is disclosed. According to the present disclosure, there is provided a secondary battery including an electrode assembly accommodated in a case, a current collector electrically connected to the electrode assembly, and a rivet welded to the current collector, wherein the current collector includes a stress relief space configured to accommodate least a portion of a weld bead generated during welding with the rivet.

## Description

### TECHNICAL FIELD

Embodiments of the present disclosure relate to a secondary battery.

### BACKGROUND

A secondary battery is one of energy storage means which can be charged and discharged through electrochemical reactions. The secondary battery is widely used in various fields in which electrical energy is used. For example, secondary batteries are widely utilized in the field of mobile devices such as a cell phone, a notebook, a tablet, and the like, and are being explored for wider utilization in the field of transportation means such as vehicles, aircraft, ships, and the like. Further, demand for secondary batteries is also rapidly increasing in the field of energy storage systems (ESSs) for utilizing surplus electricity.

Some secondary batteries use a weld joint to electrically connect an internal electrode assembly and an external terminal in a manufacturing process. For example, a current collector may be provided to be electrically connected to each electrode of the electrode assembly, and as this current collector may be welded to a rivet connected to the terminal, the internal electrode assembly and the external terminal may be electrically connected. In such weld joints, residual stress at a joint site may cause cracks and the like.

### SUMMARY

Some embodiments of the present disclosure may provide a secondary battery.

Further, some embodiments of the present disclosure may provide a secondary battery capable of implementing an appropriate weld joint between a current collector and a rivet.

In addition, some embodiments of the present disclosure may provide a secondary battery capable of reducing residual stress in a weld joint region.

In addition, some embodiments of the present disclosure may provide a secondary battery capable of reducing cracks in a weld joint region.

Some embodiments of the present disclosure may be widely applied in the field of green technologies such as an electric vehicle and a battery charging station as well as solar power generation and wind power generation using batteries. Further, some embodiments of the present disclosure may be used in an eco-friendly electric vehicle, a hybrid vehicle, and the like to prevent climate change by suppressing air pollution and greenhouse gas emissions.

According to one aspect of the present disclosure, a secondary battery including: an electrode assembly accommodated in a case; a current collector electrically connected to the electrode assembly; and a rivet welded to the current collector, wherein the current collector includes a stress relief space configured to accommodate least a portion of a weld bead generated during welding with the rivet.

In some embodiments, the case may include a prismatic case or cylindrical case.

In some embodiments, the current collector may be provided to provide an electrical path to the outside.

In some embodiments, the current collector may include a pin-shaped portion extending along a coupling hole provided in the rivet.

In some embodiments, the current collector may include a first end portion along an assembly direction with the rivet, and a first coupling surface inserted into and fastened to a coupling hole provided in the rivet.

In some embodiments, the first end portion may be provided to be spaced a certain interval apart from a second end portion of the first coupling surface in the assembly direction.

In some embodiments, the current collector may include a first chamfer at a first end portion along an assembly direction with the rivet, and the rivet may include a second chamfer that comes into contact with the first chamfer and guides insertion of the current collector.

In some embodiments, the stress relief space may be provided as a closed space surrounded by the current collector on a plane orthogonal to an assembly direction of the current collector.

In some embodiments, the stress relief space may be recessed to a certain depth from a first end portion of the current collector toward the inside of the current collector.

In some embodiments, the stress relief space may have a circular or regular polygonal cross-sectional shape and is configured to extend toward the inside of the current collector from a first end portion of the current collector.

In some embodiments, the stress relief space may include a first region exposed to the outside of a coupling hole provided in the rivet, and a second region disposed in the coupling hole.

In some embodiments, the current collector may have a first volume in a region corresponding to the first region, and the first volume may be smaller than a second volume corresponding to the second region.

In some embodiments, the stress relief space may accommodate at least a portion of the weld bead after forming a weld joint, and include a remaining partial space in which the weld bead is not accommodated.

In some embodiments, the weld bead may include a certain gap after forming a weld joint, and the gap may be provided to connect a remaining partial space of the stress relief space, in which the weld bead is not accommodated, to the outside.

In some embodiments, the current collector may be inserted into and fastened to a coupling hole provided in the rivet, and a first end portion along an assembly direction may be welded to the rivet.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings, in which:
FIG. 1 is a perspective view showing the exterior of a secondary battery according to one embodiment of the present disclosure;
FIG. 2 is a cross-sectional view showing an assembled state between a current collector and a terminal taken along line C1-C1' shown in FIG. 1;
FIG. 3 is a cross-sectional view showing a welded state of the current collector and a rivet illustrated in FIG. 2;
FIG. 4 is a plan view of the welded state illustrated in FIG. 3 as viewed from a Y-axis direction;
FIG. 5 is a cross-sectional view showing a comparative example in which a stress relief space is removed from the embodiment illustrated in FIG. 2;
FIG. 6 is a cross-sectional view showing the welded state of the current collector and the rivet illustrated in FIG. 5;
FIG. 7 is a cross-sectional view showing a stress relief space according to another embodiment of the present disclosure;
FIG. 8 is a cross-sectional view showing a stress relief space according to still another embodiment of the present disclosure.
FIG. 9 is a cross-sectional view showing a comparative example in which a width of the stress relief space is not appropriate;
FIG. 10 is a cross-sectional view showing a comparative example in which a depth of the stress relief space is not appropriate; and
FIG. 11 is a cross-sectional view showing a rivet and a terminal according to another embodiment of the present disclosure.

### DETAILED DESCRIPTION

Hereinafter, the present disclosure will be described in detail with reference to the attached drawings. However, this is merely exemplary, and the present disclosure is not limited to the specific embodiments described as examples.

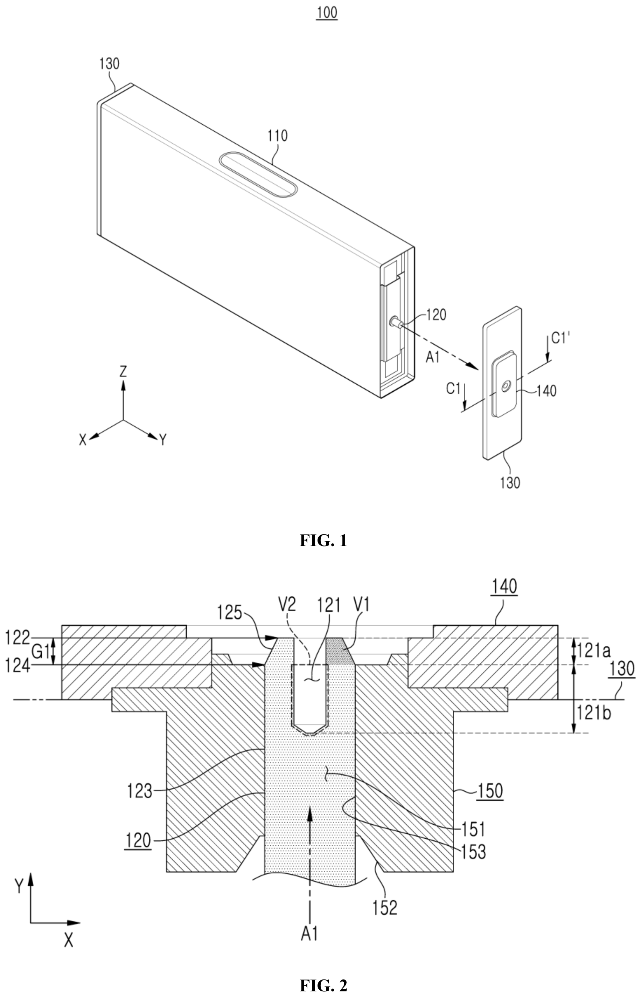

FIG. 1 is a perspective view showing the exterior of a secondary battery according to one embodiment of the present disclosure.

Referring to FIG. 1, in some embodiments, a secondary battery 100 may include a case 110. The case 110 may be provided to form an overall exterior of the secondary battery 100. Further, the case 110 may be provided to accommodate an electrode assembly or the like therein.

In some embodiments, the case 110 may be provided as a prismatic case or cylindrical case. For example, in the illustrated embodiment, the case 110 may be provided as a prismatic case having a long side in a Y-axis direction and a short side in an X-axis direction. However, in the present disclosure, the shape of the case 110 is not necessarily limited to the prismatic case or cylindrical case. The case 110 may be provided as a pouch-type case, a coin-type case, or other non-generalized shaped case within a range appropriately including the technical spirit described below.

In some embodiments, the secondary battery 100 may include a current collector 120. The current collector 120 may be provided to be electrically connected to the electrode assembly accommodated in the case 110. Further, in some embodiments, a plurality of current collectors 120 may be provided. For example, the current collector 120 may include one current collector corresponding to a first electrode and another current collector corresponding to a second electrode. For example, in the illustrated embodiment, the current collector 120 may be provided at each of one end portion and an opposite end portion of the case 110 along the Y-axis direction. However, the number or arrangement of the current collectors 120 may vary as needed and are not necessarily limited to the illustrated examples.

In some embodiments, the current collector 120 may be provided to provide an electrical path to the outside. That is, the current collector 120 may be provided to provide an electrical path from the electrode assembly to the outside of the secondary battery 100. For example, in the illustrated embodiment, the current collector 120 may be electrically connected to a terminal 140 disposed on a cap plate 130 and provided to be provide an electrical path from the electrode assembly to the terminal 140.

In some embodiments, the current collector 120 may be provided in a pin shape. That is, in some embodiments, the current collector 120 may include a pin-type current collector. For example, in the illustrated embodiment, the pin-type current collector 120 may be disposed to correspond to the Y-axis direction and provided to extend from the case 110 toward the terminal 140. As will be described below, the pin-type current collector 120 may be inserted into and fastened to a coupling hole 151 provided in a rivet 150.

Meanwhile, in some embodiments, the secondary battery 100 may include the cap plate 130. The cap plate 130 may be fastened to the case 110 to close an opening of the case 110. For example, in the illustrated embodiment, the case 110 may be provided with an opening at each of both end portions in the Y-axis direction, and a pair of cap plates 130 may be provided to correspond to each of the openings.

In some embodiments, the terminal 140 may be disposed on the cap plate 130. The terminal 140 may be provided to be electrically connected to the electrode assembly in the case 110. As described above, in some embodiments, the terminal 140 may be provided to be electrically connected to the electrode assembly through the current collector 120. The terminal 140 may be provided to provide an electrical path between an internal electrode assembly and an external electrical connection means such as a bus bar.

Although not illustrated, in some embodiments, the secondary battery 100 may include the electrode assembly. The electrode assembly may be provided to be accommodated in the case 110. In some embodiments, the electrode assembly may include a first electrode and a second electrode disposed with a separator therebetween. Further, in some embodiments, the electrode assembly may be provided as a winding type, a stacking type, a zigzag-folding type, a stack-folding type, or the like. However, in the present disclosure, the detailed configuration of the electrode assembly may be modified in various ways as needed and is not necessarily limited to the illustrated examples.

FIG. 2 is a cross-sectional view showing an assembled state between the current collector and the terminal taken along line C1-C1' shown in FIG. 1.

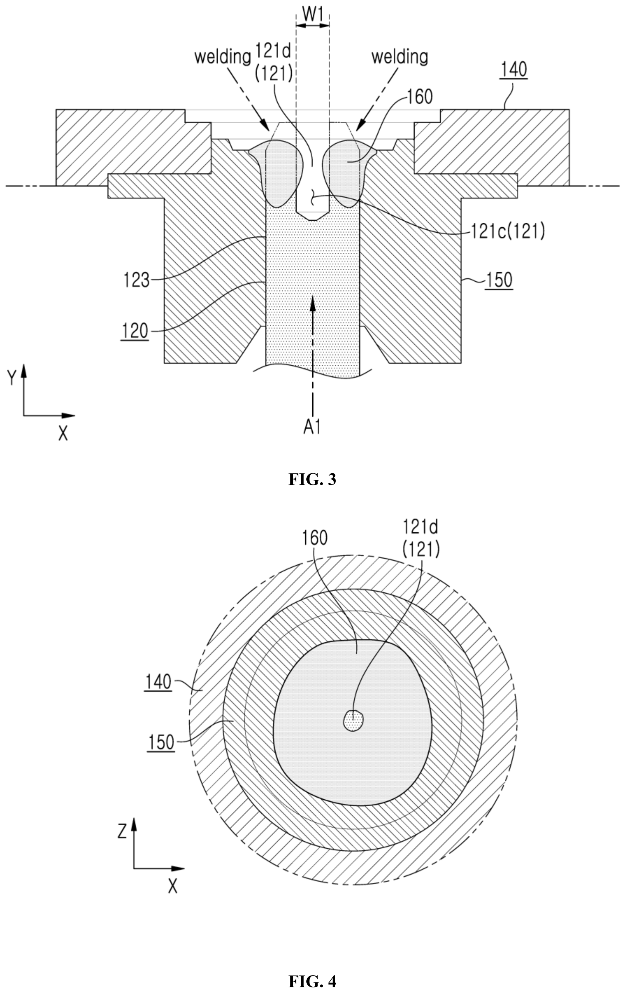

Referring to FIG. 2, in some embodiments, the secondary battery 100 may include the electrode assembly accommodated in the case 110, the current collector 120 electrically connected to the electrode assembly, and the rivet 150 welded to the current collector 120. Here, the current collector 120 may include a stress relief space 121 in which at least a portion of a weld bead 160 (see FIG. 3) generated when welding with the rivet 150 is accommodated.

Specifically, in some embodiments, the secondary battery 100 may include the current collector 120. As described above, the current collector 120 may be provided to be electrically connected to the electrode assembly in the case 110. Further, the current collector 120 may be provided in a pin shape. The pin-shaped current collector 120 may be inserted into and fastened to the coupling hole 151 provided in the rivet 150, and formed to extend along the coupling hole 151.

In the above, the current collector 120 may include the stress relief space 121. The stress relief space 121 may be provided to accommodate the weld bead 160 generated when welding the current collector 120 and the rivet 150. Specifically, the current collector 120 and the rivet 150 may be welded together, and accordingly, the weld bead 160 may be generated. Here, the stress relief space 121 may be provided to accommodate at least a portion of the weld bead 160 generated in this way. This will be further described in the following description.

Meanwhile, in some embodiments, the secondary battery 100 may include the rivet 150. The rivet 150 may be welded to the current collector 120. For reference, FIG. 2 illustrates an assembled state before the current collector 120 and the rivet 150 are welded. The welded state in which the current collector 120 and the rivet 150 are welded together is illustrated in FIG. 3. Hereinafter, for convenience, a state in which the current collector 120 and the rivet 150 are assembled as shown in FIG. 2 will be referred to as 'the assembled state,' and a state in which the current collector 120 and the rivet 150 are welded together as shown in FIG. 3 will be referred to as 'the welded state.'

In some embodiments, the rivet 150 may include the coupling hole 151 into which the current collector 120 is inserted and fastened. The coupling hole 151 may be formed to extend along an assembly direction A1 of the current collector 120. For example, in the illustrated embodiment, the current collector 120 may be inserted into and fastened to the coupling hole 151 along the Y-axis direction, and accordingly, the coupling hole 151 may be formed to extend along the Y-axis direction. In some embodiments, the coupling hole 151 may be provided to pass through the rivet 150 along the assembly direction A1.

In some embodiments, the rivet 150 may be provided to be electrically connected to the terminal 140 disposed on the cap plate 130. For example, the rivet 150 may be provided to be joined to one surface of the terminal 140 and electrically connected to the terminal 140. Alternatively, in some other embodiments, a portion or all of the rivet 150 may be provided to be integrated with the terminal 140. For example, since the rivet 150 may be fully integrated with the terminal 140, a partial region of the terminal 140 may be provided to function as the rivet 150.

In some embodiments, the current collector 120 and the rivet 150 may be formed of an electrically conductive material. For example, the current collector 120 and/or the rivet 150 may contain a material such as copper, aluminum, stainless steel, or the like. In some embodiments, the current collector 120 and the rivet 150 may be formed of the same or different materials.

Meanwhile, in some embodiments, the current collector 120 may include a first end portion 122 along the assembly direction A1. For example, in the illustrated embodiment, the first end portion 122 may refer to an upper end of the current collector 120 along the Y-axis direction. Further, in some embodiments, the current collector 120 may include a first coupling surface 123 inserted into and fastened to the coupling hole 151. For example, in the illustrated embodiment, the first coupling surface 123 may refer to a portion of an outer circumferential surface of the current collector 120 centered on the Y-axis. The first coupling surface 123 may be coupled in close contact with a second coupling surface 153 provided on the rivet 150. Further, the second coupling surface 153 may be provided as a portion of an inner circumferential surface of the rivet 150 surrounding the coupling hole 151.

In the above, the first coupling surface 123 may include a second end portion 124 along the assembly direction A1. For example, in the illustrated embodiment, the second end portion 124 may refer to an upper end of the first coupling surface 123 along the Y-axis direction. The current collector 120 may be coupled in close contact with the second coupling surface 153 in a region extending from one end portion to an opposite end portion of the first coupling surface 123. For example, in the illustrated embodiment, the current collector 120 may be coupled in close contact with the second coupling surface 153 in a region extending from a lower end of the first coupling surface 123 to the upper end of the first coupling surface 123 corresponding to the second end portion 124.

In the above, the first end portion 122 may be provided to be spaced a certain interval G1 apart from the second end portion 124 in the assembly direction A1. For example, in the illustrated embodiment, the first end portion 122 may be provided to be spaced a certain interval G1 apart from the second end portion 124 in the Y-axis direction. Accordingly, the current collector 120 may be partially exposed to the outside of the coupling hole 151 in a region corresponding to the interval G1. For example, in the illustrated embodiment, a partial region of the upper end of the current collector 120 corresponding to the interval G1 may be exposed to the outside of the coupling hole 151. This exposed region of the current collector 120 may contribute to making a smooth weld joint between the current collector 120 and the rivet 150.

Meanwhile, in some embodiments, a first chamfer 125 may be provided at the first end portion 122 of the current collector 120. The first chamfer 125 may be provided by obliquely cutting or gently bending the outer circumferential surface of the first end portion 122. The illustrated embodiment exemplifies a first chamfer 125 which is obliquely cut. Further, a second chamfer 152 corresponding to the first chamfer 125 may be provided in the rivet 150. The second chamfer 152 may be provided at one end region of the coupling hole 151 into which the current collector 120 is inserted and fastened. For example, in the illustrated embodiment, the second chamfer 152 may be provided at a lower end of the second coupling surface 153. Similar to the first chamfer 125, the second chamfer 152 may be provided by obliquely cutting or gently bending the lower end of the second coupling surface 153. The illustrated embodiment exemplifies a second chamfer 152 which is obliquely cut. This first and second chamfers 125 and 152 may function to appropriately guide the assembly of the current collector 120 and the rivet 150.

Meanwhile, in some embodiments, the stress relief space 121 may be formed to be recessed to a certain depth from the first end portion 122 toward the inside of the current collector 120. In other words, the stress relief space 121 may be formed to be recessed to a certain depth from the first end portion 122 toward a direction opposite to the assembly direction A1. For example, in the illustrated embodiment, the stress relief space 121 may be formed to be recessed to a certain depth downward from the first end portion 122 along the Y-axis direction. This stress relief space 121 may function to accommodate the weld bead 160 generated when welding the current collector 120. Thus, residual stress after welding may be relieved.

In some embodiments, the stress relief space 121 may be formed to extend to a certain depth below the second end portion 124. Accordingly, the stress relief space 121 may include a first region 121a exposed to the outside of the coupling hole 151 and a second region 121b disposed inside the coupling hole 151. For example, in the illustrated embodiment, the first region 121a may correspond to an upper partial region along the Y-axis direction, and the second region 121b may correspond to a lower partial region along the Y-axis direction. In other words, the first region 121a may correspond to a region extending from the first end portion 122 to the second end portion 124 along the Y-axis direction, and the second region 121b may correspond to a region extending from the second end portion 124 to a bottom surface of the stress relief space 121 along the Y-axis direction. The first region 121a may be disposed above the second end portion 124 and disposed outside the coupling hole 151. Further, the second region 121b may be disposed below the second end portion 124 and disposed inside the coupling hole 151. The stress relief space 121 may be provided so that the first and second regions 121a and 121b are continuously disposed to form a single space.

In the above, the current collector 120 may be provided to have a first volume V1 in a region corresponding to the first region 121a. For example, in the illustrated embodiment, a partial region of the upper end of the current collector 120 along the Y-axis direction may be disposed at a position corresponding to the first region 121a, and the partial region of the upper end of the current collector 120 may have the first volume V1. Further, the second region 121b of the stress relief space 121 may be provided to have a certain second volume V2. For example, in the illustrated embodiment, the second volume V2 may correspond to the volume of the region extending from the second end portion 124 to the bottom surface of the stress relief space 121.

In the above, the first volume V1 may be formed to be slightly smaller than the second volume V2. Although not particularly limited, for example, the first volume V1 may be formed to be 50% or less of the second volume V2. This configuration allows an appropriate space for accommodating the weld bead 160 to be secured. Further, this configuration also allows the weld bead 160 to be accommodated in a portion of the stress relief space 121 after welding, while allowing a remaining portion of the stress relief space 121 to remain appropriately in the form of an empty space.

FIG. 3 is a cross-sectional view showing a welded state of the current collector and the rivet illustrated in FIG. 2. FIG. 4 is a plan view of the welded state shown in FIG. 3 as viewed from the Y-axis direction.

FIGS. 3 and 4 illustrate the state in which the current collector 120 and the rivet 150, which are assembled as shown in FIG. 2, are welded together. Referring to FIGS. 3 and 4, the current collector 120 and the rivet 150, which are assembled as shown in FIG. 2, may be welded together. In the present disclosure, a method of forming a weld joint is not specifically limited. For example, the current collector 120 and the rivet 150 may be welded together using laser welding. In some embodiments, a welding device may be provided to weld the current collector 120 and the rivet 150 by applying welding heat in a region adjacent to the first end portion 122. Further, the welding device may be provided to apply welding heat to the entire first end portion 122, or to apply welding heat while moving along the outer circumferential surface of the current collector 120 from the first end portion 122.

The current collector 120 and the rivet 150 may be welded together by the above-described welding device while forming a certain weld bead 160. For reference, FIG. 3 and the like illustrate an exemplary shape of the weld bead 160 according to the weld joint, and the specific shape of the weld bead 160 is not necessarily limited to the exemplary shape.

In the above, the weld bead 160 may be provided so that at least a portion of the weld bead 160 flows into the stress relief space 121 and is accommodated in the stress relief space 121. In other words, the weld bead 160 generated when welding may have a certain fluidity before hardening, and at least a portion of the weld bead 160 having such fluidity may flow into the stress relief space 121 and may be accommodated in the stress relief space 121. The illustrated embodiment exemplifies a case in which the upper partial region of the current collector 120 approximately corresponding to the first region 121a is melted and fluidized by welding, and flows into and is accommodated in an upper partial region of the second region 121b of the stress relief space 121.

In some embodiments, the stress relief space 121 may be provided so that a portion of the stress relief space remains empty even after forming a weld joint. In other words, the stress relief space 121 may be provided with a sufficient size to appropriately accommodate the weld bead 160 generated when welding and include a remaining portion of a space 121c in which the weld bead 160 is not accommodated even after forming the weld joint. In some embodiments, securing this remaining portion of the space 121c may be implemented by appropriately setting the sizes of the above-described first and second volumes V1 and V2. The remaining portion of the space 121c maintained in this way even after welding may function to release residual stress during a process of hardening the weld bead 160 and prevent cracks.

Meanwhile, in some embodiments, a gap 121d may be provided in the weld bead 160 after forming the weld joint. The gap 121d may be provided to connect a remaining partial space 121c of the stress relief space 121 in which the weld bead 160 is not accommodated after forming the weld joint to the outside. That is, the gap 121d may be provided as a certain space or path formed between the weld beads 160 flowing into the stress relief space 121. In some embodiments, the gap 121d may be formed during a process of generating the weld bead 160 and provided to be maintained even after forming the weld joint. Further, the formation and maintenance of the gap 121d may be implemented by appropriately setting a width W1 of the stress relief space 121.

The above-described gap 121d may function to prevent a reaction force from being generated due to contact between the weld beads 160 during a process of generating, flowing, and hardening the weld beads 160. Further, the gap 121d may be maintained after forming the weld joint and may contribute to preventing the cracks caused by residual stress. For reference, in the illustrated embodiment, the gap 121d is exemplified as a single path passing through approximately the center of the weld bead 160 between the remaining partial space 121c of the stress relief space 121 and the outside. However, the gap 121d is not specifically limited in its position, shape, number, or the like as long as it may appropriately prevent interference between the weld beads 160 during the process of generating the weld bead 160 and the like, and is not necessarily limited to the illustrated examples. Further, in some embodiments, the gap 121d may also be provided as an irregularly shaped space, path, or the like depending on the shape of the weld bead 160.

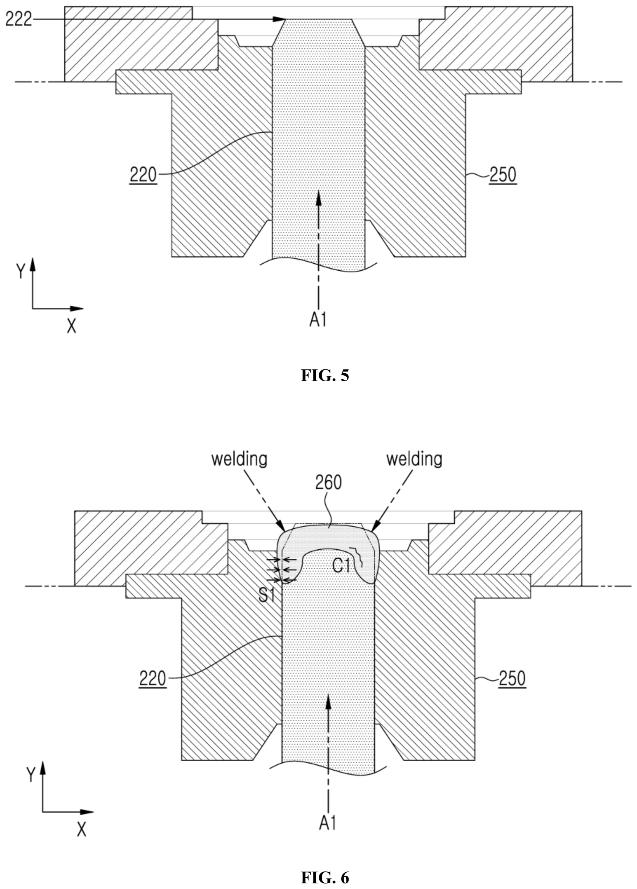

FIG. 5 is a cross-sectional view showing a comparative example in which the stress relief space is removed from the embodiment illustrated in FIG. 2. FIG. 6 is a cross-sectional view showing the welded state of the current collector and the rivet illustrated in FIG. 5.

FIGS. 5 and 6 illustrate the comparative example in which the stress relief space 121 is removed from the above-described embodiment. The comparative example in FIGS. 5 and 6 is provided to more clearly describe the function, effects, and the like of the stress relief space 121 and does not represent the related art.

Referring to FIGS. 5 and 6, similar to the above-described embodiment, welding heat may be applied at a first end portion 222 to weld a current collector 220 and a rivet 250. Accordingly, the current collector 220 and the rivet 250 may be welded together while forming a certain weld bead 260. However, unlike the above-described embodiment, in the comparative example, the weld bead 260 may be generated in the form of completely filling a space between the current collector 220 and the rivet 250 without leaving an empty space. Accordingly, residual stress S1 caused by the weld bead 260 may be continuously applied to the weld bead 260, the current collector 220, the rivet 250, and the like. Further, this residual stress S1 may cause cracks C1. In contrast to this comparative example, the above-described embodiment may contribute to appropriately releasing residual stress through the stress relief space 121 and preventing the occurrence of cracks or the like.

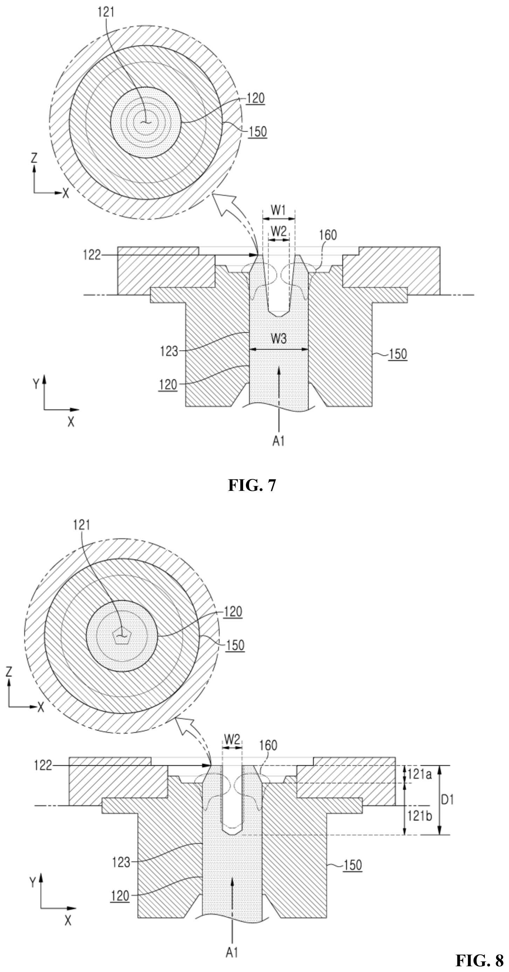

FIG. 7 is a cross-sectional view showing a stress relief space according to another embodiment of the present disclosure.

Hereinafter, for convenience, the following description will focus on the differences from the above-described embodiment.

Referring to FIG. 7, in some embodiments, a stress relief space 121 may include a closed space surrounded by a current collector 120 on a plane orthogonal to the assembly direction A1. That is, as illustrated in an enlarged view in FIG. 7, the stress relief space 121 may be provided as a closed space surrounded by the current collector 120 on an XZ plane. This stress relief space 121 may function to accommodate a weld bead 160 generated when welding in all directions on the XZ plane. Accordingly, introduction of the weld bead 160 may be achieved more smoothly. Further, a residual stress releasing effect can be improved due to the smooth introduction of the weld bead 160.

In some embodiments, the stress relief space 121 may have a certain cross-sectional shape and may be formed to extend along the assembly direction A1. For reference, the cross-sectional shape refers to a shape of the stress relief space 121 on the plane orthogonal to the assembly direction A1. In some embodiments, the cross-sectional shape of the stress relief space 121 may be provided in a circular or regular polygonal shape. FIG. 7 exemplifies a circular cross-sectional shape, and FIG. 8 to be described below exemplifies a regular polygonal cross-sectional shape. The circular or regular polygonal shape may contribute to evenly relieving residual stress in all directions on the XZ plane through a symmetrical shape thereof.

In some embodiments, the stress relief space 121 may be provided to gradually decrease or increase along the assembly direction A1. Alternatively, the stress relief space 121 may have a region which partially decreases along the assembly direction A1 or a region which partially increases along the assembly direction A1. The illustrated embodiment exemplifies a case in which widths W1 and W2 of the stress relief space 121 gradually decrease from an upper end to a lower end along the Y-axis direction. The stress relief space 121 of the illustrated embodiment may form a certain inclination on an inner circumferential surface of the current collector 120 surrounding the stress relief space 121 and function to assist the introduction of the weld bead 160.

FIG. 8 is a cross-sectional view showing a stress relief space according to still another embodiment of the present disclosure.

Referring to FIG. 8, in some embodiments, a cross-sectional shape of a stress relief space 121 may be formed in a regular polygonal shape. For example, the cross-sectional shape of the stress relief space 121 may be provided in the shape such as a regular triangular shape, a square shape, a regular pentagonal shape, a regular hexagonal shape, or the like. The illustrated embodiment exemplifies a regular pentagonal cross-sectional shape. Similar to the shape described above in FIG. 7, the regular polygonal shape may contribute to evenly relieving residual stress in all directions through a symmetrical shape thereof.

However, the cross-sectional shape of the stress relief space 121 is not necessarily limited to the illustrated examples. The stress relief space 121 may be have various shapes other than the illustrated examples as long as it may appropriately accommodate a weld bead 160 generated when welding. For example, the cross-sectional shape of the stress relief space 121 may be provided as a polygonal shape, an asymmetrical shape, other non-specific irregular shapes, or the like.

Meanwhile, in some embodiments, the stress relief space 121 may have a certain depth D1. Here, the depth D1 of the stress relief space 121 may refer to a depth from a first end portion 122 to a bottom surface of the stress relief space 121. In other words, the depth D1 of the stress relief space 121 may refer to the depth of first and second regions 121a and 121b along the Y-axis direction in an assembled state. The depth D1 of the stress relief space 121 may be appropriately set in consideration of the size, shape, and the like of the weld bead 160 generated when welding. Further, the depth D1 of the stress relief space 121 may be appropriately set in consideration of a first volume V1 of the current collector 120 and a second volume V2 of the stress relief space 121. For example, in the embodiment illustrated in FIG. 8, the stress relief space 121 may have a relatively smaller width W2 and may be formed relatively deeper compared to the embodiment illustrated in FIG. 2.

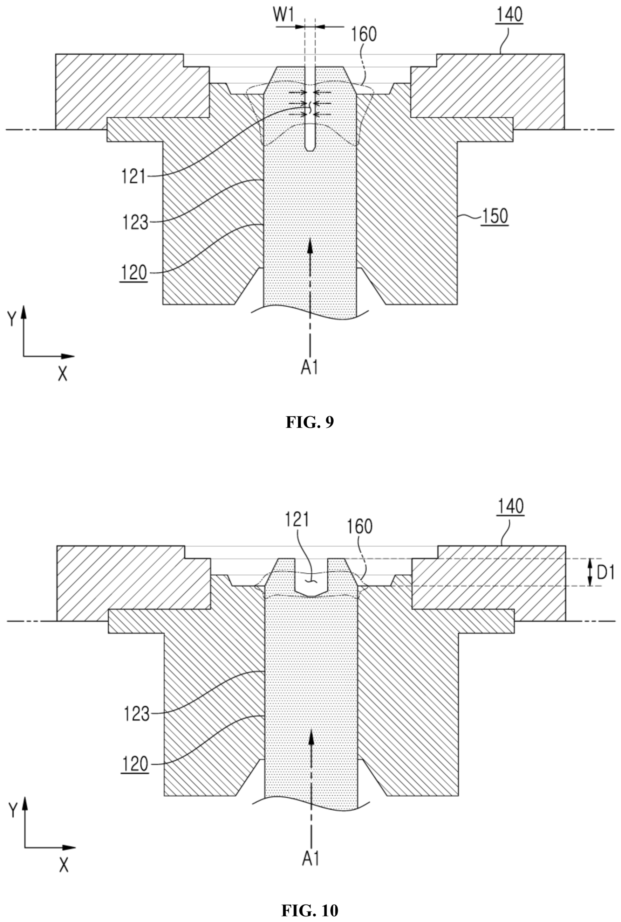

FIG. 9 is a cross-sectional view showing a comparative example of a case in which the width of the stress relief space is narrow.

Referring to FIG. 9, a width W1 of the stress relief space 121 may be appropriately determined in consideration of the shape, volume, flow, and the like of the weld bead 160. For example, when the width W1 of the stress relief space 121 is excessively narrow, the weld beads 160 in each region may interfere with each other in a process in which the weld beads 160 flow and are hardened. Accordingly, the contact between the weld beads 160 in the hardening process may generate a reaction force, and this reaction force may be a factor which causes cracks or increases residual stress.

FIG. 10 is a cross-sectional view showing a comparative example of a case in which the depth of the stress relief space is small.

Referring to FIG. 10, the depth D1 of the stress relief space 121 may also be appropriately determined based on the shape, volume, flow, and the like of the weld bead 160. For example, when the width W1 of the stress relief space 121 is excessively small, residual stress may not be appropriately released at a lower portion of the weld bead 160 along a depth direction, and accordingly, cracks may be caused.

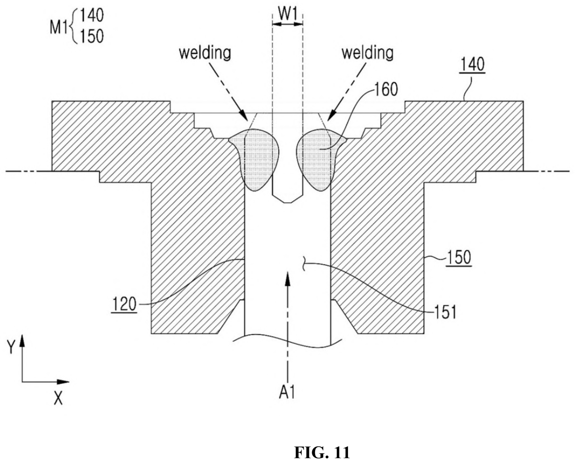

FIG. 11 is a cross-sectional view showing a rivet and a terminal according to another embodiment of the present disclosure.

Referring to FIG. 11, in some embodiments, a portion or all of a rivet 150 may be provided as a partial element of a terminal 140. For example, the rivet 150 may be integrally provided with the terminal 140 as illustrated. In other words, the rivet 150 and the terminal 140 may be provided to be integrated as a single rivet-terminal assembly M1. In this case, the rivet 150 may be provided as a partial region of the rivet-terminal assembly M1 (for example, a lower region of the illustrated rivet-terminal assembly M1), and the terminal 140 may be provided as another partial region of the rivet-terminal assembly M1 (for example, an upper region of the illustrated rivet-terminal assembly M1).

Meanwhile, a coupling hole 151 may be provided in the above-described rivet-terminal assembly M1, and a current collector 120 may be inserted into and welded to the coupling hole 151. Further, the current collector 120 may include a stress relief space, and the stress relief space may accommodate a weld bead 160 to contribute to releasing residual stress and the like. This stress relief space may function generally similarly to the above-described embodiments.

As described above, some embodiments of the present disclosure may provide a secondary battery.

Further, some embodiments of the present disclosure may implement an appropriate weld joint between the current collector and the rivet. Some embodiments of the present disclosure may increase crack resistance by reducing the residual stress at a weld joint region, that is, the weld bead, and thus may secure a relatively deep penetration depth. Securing the penetration depth may contribute to securing weld integrity between the current collector and the rivet. Further, securing the penetration depth may also increase a contact area between the weld bead and a component to contribute to improving the strength of the joint and reducing electrical resistance.

In addition, some embodiments of the present disclosure may reduce the residual stress in the weld joint region. In some embodiments of the present disclosure, the stress relief space may be provided in the current collector, and this stress relief space may function to accommodate the weld bead generated when welding and reduce the residual stress caused by the weld bead.

Further, some embodiments of the present disclosure may reduce the occurrence of cracks in the weld joint region. Some embodiments of the present disclosure may function to reduce residual stress through the stress relief space, and this reduction of residual stress may contribute to reducing the cracks caused by residual stress. Further, this reduction of cracks may contribute to improving the performance, quality, manufacturing costs, and the like of the secondary battery.

Some embodiments of the present disclosure can provide a secondary battery.

Further, some embodiments of the present disclosure can provide a secondary battery capable of implementing an appropriate weld joint between a current collector and a rivet.

In addition, some embodiments of the present disclosure can provide a secondary battery capable of reducing residual stress in a weld joint region.

In addition, some embodiments of the present disclosure can provide a secondary battery capable of reducing cracks in a weld joint region.

Some of the aspects of the present disclosure are as follows:
Aspects 1: A secondary battery comprising: an electrode assembly accommodated in a case 110; a current collector 120 electrically connected to the electrode assembly; and a rivet 150 welded to the current collector 120, wherein the current collector 120 includes a stress relief space 121 configured to accommodate least a portion of a weld bead 160 generated during welding with the rivet 150.
Aspects 2: The secondary battery of aspect 1, wherein the case 110 includes a prismatic case or cylindrical case.
Aspects 3: The secondary battery according to any one of the preceding aspects, wherein the current collector 120 is provided to provide an electrical path to the outside.
Aspects 4: The secondary battery according to any one of the preceding aspects, wherein the current collector 120 includes a pin-shaped portion extending along a coupling hole 151 provided in the rivet 150.
Aspects 5: The secondary battery according to any one of the preceding aspects, wherein the current collector 120 includes a first end portion 122 along an assembly direction with the rivet 150, and a first coupling surface 123 inserted into and fastened to a coupling hole 151 provided in the rivet 150.
Aspects 6: The secondary battery according to any one of the preceding aspects, wherein the first end portion 122 is provided to be spaced a certain interval apart from a second end portion of the first coupling surface 123 in the assembly direction.
Aspects 7: The secondary battery according to any one of the preceding aspects, wherein the current collector 120 includes a first chamfer 125 at a first end portion 122 along an assembly direction with the rivet 150, and the rivet 150 includes a second chamfer 152 that comes into contact with the first chamfer 125 and guides insertion of the current collector 120.
Aspects 8: The secondary battery according to any one of the preceding aspects, wherein the stress relief space 121 is provided as a closed space surrounded by the current collector 120 on a plane orthogonal to an assembly direction of the current collector 120.
Aspects 9: The secondary battery according to any one of the preceding aspects, wherein the stress relief space 121 is recessed to a certain depth from a first end portion 122 of the current collector 120 toward the inside of the current collector 120.
Aspects 10: The secondary battery according to any one of the preceding aspects, wherein the stress relief space 121 has a circular or regular polygonal cross-sectional shape and is configured to extend toward the inside of the current collector 120 from a first end portion 122 of the current collector 120.
Aspects 11: The secondary battery according to any one of the preceding aspects, wherein the stress relief space 121 includes a first region exposed to the outside of a coupling hole 151 provided in the rivet 150, and a second region disposed in the coupling hole 151.
Aspects 12: The secondary battery according to any one of the preceding aspects, wherein the current collector 120 has a first volume in a region corresponding to the first region, and the first volume is smaller than a second volume corresponding to the second region.
Aspects 13: The secondary battery according to any one of the preceding aspects, wherein the stress relief space 121 accommodates at least a portion of the weld bead 160 after forming a weld joint, and includes a remaining partial space in which the weld bead 160 is not accommodated.
Aspects 14: The secondary battery according to any one of the preceding aspects, wherein the weld bead 160 includes a certain gap after forming a weld joint, and the gap is provided to connect a remaining partial space of the stress relief space 121, in which the weld bead 160 is not accommodated, to the outside.
Aspects 15: The secondary battery according to any one of the preceding aspects, wherein the current collector 120 is inserted into and fastened to a coupling hole 151 provided in the rivet 150, and a first end portion 122 along an assembly direction is welded to the rivet 150.

The above description is merely an example of applying the principles of the present disclosure, and other configurations may be further included without departing from the scope of the present disclosure.

## Claims

1. A secondary battery comprising:
an electrode assembly accommodated in a case (110);
a current collector (120) electrically connected to the electrode assembly; and
a rivet (150) welded to the current collector (120),
wherein the current collector (120) includes a stress relief space (121) configured to accommodate least a portion of a weld bead (160) generated during welding with the rivet (150).

2. The secondary battery of claim 1, wherein the case (110) includes a prismatic case or cylindrical case.

3. The secondary battery of claim 1 or 2, wherein the current collector (120) is provided to provide an electrical path to the outside.

4. The secondary battery of any one of the preceding claims, wherein the current collector (120) includes a pin-shaped portion extending along a coupling hole (151) provided in the rivet (150).

5. The secondary battery of any one of the preceding claims, wherein the current collector (120) includes a first end portion (122) along an assembly direction with the rivet (150), and a first coupling surface (123) inserted into and fastened to a coupling hole (151) provided in the rivet (150).

6. The secondary battery of claim 5, wherein the first end portion (122) is provided to be spaced a certain interval apart from a second end portion of the first coupling surface (123) in the assembly direction.

7. The secondary battery of any one of the preceding claims, wherein the current collector (120) includes a first chamfer (125) at a first end portion (122) along an assembly direction with the rivet (150), and
the rivet (150) includes a second chamfer (152) that comes into contact with the first chamfer (125) and guides insertion of the current collector (120).

8. The secondary battery of any one of the preceding claims, wherein the stress relief space (121) is provided as a closed space surrounded by the current collector (120) on a plane orthogonal to an assembly direction of the current collector (120).

9. The secondary battery of any one of the preceding claims, wherein the stress relief space (121) is recessed to a certain depth from a first end portion (122) of the current collector (120) toward the inside of the current collector (120).

10. The secondary battery of any one of the preceding claims, wherein the stress relief space (121) has a circular or regular polygonal cross-sectional shape and is configured to extend toward the inside of the current collector (120) from a first end portion (122) of the current collector (120).

11. The secondary battery of any one of the preceding claims, wherein the stress relief space (121) includes a first region exposed to the outside of a coupling hole (151) provided in the rivet (150), and a second region disposed in the coupling hole (151).

12. The secondary battery of claim 11, wherein the current collector (120) has a first volume in a region corresponding to the first region, and
the first volume is smaller than a second volume corresponding to the second region.

13. The secondary battery of any one of the preceding claims, wherein the stress relief space (121) accommodates at least a portion of the weld bead (160) after forming a weld joint, and includes a remaining partial space in which the weld bead (160) is not accommodated.

14. The secondary battery of any one of the preceding claims, wherein the weld bead (160) includes a certain gap after forming a weld joint, and
the gap is provided to connect a remaining partial space of the stress relief space (121), in which the weld bead (160) is not accommodated, to the outside.

15. The secondary battery of any one of the preceding claims, wherein the current collector (120) is inserted into and fastened to a coupling hole (151) provided in the rivet (150), and
a first end portion (122) along an assembly direction is welded to the rivet (150).
